# EUROPÄISCHE PATENTSCHRIFT

(11) **EP 1 391 329 B1**
(45) Veröffentlichungstag und Bekanntmachung des Hinweises auf die Patenterteilung: **04.05.2005**
(21) Anmeldenummer: 03014977.7
(22) Anmeldetag: 02.07.2003
(51) Int. Cl.: B60D 5/00, B61D 17/22

(54) **Falte oder Welle eines Balges oder Überganges zwischen zwei gelenkig miteinander verbundenen Fahrzeugen oder Fahrzeugteilen**
Fold or corrugation of a bellows or passageway between two artculated vehicles or vehicle parts
Pli ou ondulation d'un soufflet ou d'un intercomuniquant entre deux véhicules, ou parties de véhicules, articulés entr'eux

(30) Priorität: 23.08.2002 DE 10238673
(43) Veröffentlichungstag der Anmeldung: 25.02.2004
(73) Patentinhaber: HÜBNER GmbH, 34123 Kassel (DE)
(72) Erfinder: Mosaner, Knud, 34127 Kassel (DE); Koch, Robert, 37242 Bad Sooden Allendorf (DE)
(74) Vertreter: WALTHER, WALTHER & HINZ Patentanwälte

(56) Entgegenhaltungen:
- EP-A- 0 653 319
- DE-A- 2 617 931
- DE-A- 3 604 988
- DE-A- 3 612 425
- US-A- 1 586 812
- US-A- 6 054 194

## Beschreibung

Die vorliegende Erfindung betrifft eine Falte oder Welle eines Balges eines Überganges zwischen zwei gelenkig miteinander verbundenen Fahrzeugen oder Fahrzeugteilen, z. B. eines Gelenkbusses.

Falten- oder Wellenbälge sind bekannt. Diese sind Bestandteil eines Überganges zwischen zwei gelenkig miteinander verbundenen Fahrzeugen, z. B. eines Gelenkbusses und umschließen die Übergangsbrücke und das Gelenk nach Art einer im Querschnitt etwa rechteckigen Hülse derart, dass die Personen von dem einen Fahrzeugteil in das andere Fahrzeugteil gelangen können, ohne Witterungseinflüssen ausgesetzt zu sein.

Darüber hinaus sind sogenannte Niederflurfahrzeuge bekannt. Derartige Niederflurfahrzeuge zeichnen sich durch eine sehr geringe Bodenfreiheit aus. Durch Niederflurfahrzeuge wird erreicht, dass die Personen im Wesentlichen bodengleich in das Fahrzeug einsteigen können, was insbesondere für Rollstuhlfahrer von Vorteil ist. Problematisch ist bei diesen Gelenkfahrzeugen, insbesondere Bussen, die geringe Bodenfreiheit. Um zu verhindern, dass bei Überfahren von Kuppen oder bei Durchfahren von Senken der Balg auf der Straße schleift, ist bereits bekannt, die Falten im Bodenbereich in der Höhe zu vermindern. Eine Verminderung in der Höhe der Falte bedingt naturgemäß allerdings auch eine Verminderung des maximalen Auszuges bei Durchfahren einer Kurve eines derartigen Gelenkfahrzeuges mit Balg. Allerdings wird die Auszugsweite nicht allein durch die Verminderung der Höhe der Falten bzw. Wellen im Bodenbereich verringert, sondern vielmehr auch allein bereits dadurch, dass der Eckradius des Balges als solcher bereits eine Verminderung des Auszuges bewirkt. Das heißt, es kommen zwei Komponenten zusammen; zum Einen die Tatsache, dass auf Grund der Eckausbildung eines Balges dort lediglich ein verminderter Auszug möglich ist, und zum Anderen, dass insbesondere bei Niederflurfahrzeugen die Höhe der Falten oder Wellen im Übergangsbereich, also im Übergangsbereich von der Seitenwand zum Boden bzw. zur Decke somit im Eckbereich ebenfalls vermindert ist. Beide Komponenten vermindern die Auszugsweite.

Nun ist aus der EP 653 319 bekannt, durch eine spezielle Ausgestaltung der Falte im Eckbereich durch Bildung einer Tasche einen vergrößerten Auszug zur Verfügung zu stellen.

Auch ist bereits aus der DE-OS 26 17 931 bekannt, eine sogenannte Doppelfalte zwischen zwei Normalfalten anzuordnen, um dadurch den Auszug insbesondere im Eckbereich zu vergrößern.

Es hat sich jedoch herausgestellt, dass insbesondere bei Niederflurfahrzeugen und bei Fahrzeugen, die enge Kurven durchfahren müssen, keine der Maßnahmen ausreichend ist, um die erforderliche Auszugsweite bereitstellen zu können.

Der Erfindung liegt daher die Aufgabe zu Grunde, einen Falten- oder Wellenbalg, insbesondere für ein Niederflurfahrzeug bereitzustellen, der das Durchfahren enger Kurven durch einen erhöhten Auszug im Eckbereich des Balges ermöglicht.

Die Aufgabe wird erfindungsgemäß dadurch gelöst, dass die Welle oder Falte im Eckbereich des Balges zur Vergrößerung des Auszuges des Balges im Eckbereich eine Einsatzfalten- oder Welleneinheit mit mehreren Falten oder Wellen aufweist, wobei die Einsatzfalten- oder Einsatzwelleneinheit im Bereich ihres oberen Endes in dem Scheitel der Falte oder Welle ausläuft und mit dieser dort verbunden ist.

Der der Erfindung zu Grunde liegende Gedanke besteht also darin, eine vorhandene Falte oder Welle in mehrere eine Einheit bildende Falten oder Wellen aufzuspalten, um durch diese Vielzahl an Falten oder Wellen im Bereich einer einzigen Falte, der sogenannten Hauptfalte oder -welle den gewünschten Auszug im Eckbereich, d. h. im Übergangsbereich von der Seitenwand zum Boden- bzw. auch zum Deckenbereich bereitstellen zu können.

Vorteilhafte Merkmale und Ausgestaltungen der Erfindung sind den Unteransprüchen zu entnehmen.

So ist insbesondere vorgesehen, dass die Einsatzfalten- oder Einsatzwelleneinheit einteilig, z. B. Polyurethan gespritzt ausgebildet ist. Durch das Spritzen einer derartigen Einsatzeinheit wird erreicht, dass eine Vielzahl von Falten oder Wellen, die in einem Punkt zusammenlaufen müssen, nämlich in dem Punkt des Übergangs zum Scheitelpunkt der diese Einheit aufnehmenden Hauptfalte bzw. Hauptwelle nicht übermäßig aufträgt. Dies wäre insbesondere dann der Fall, wenn die einzelnen Falten oder Wellen dieser gesonderten Einheit zusammengenäht werden, wie dies ebenfalls aus der Balgfertigung bekannt ist.

Nach einem weiteren Merkmal der Erfindung weisen die Falten oder Wellen der Einsatzfalten- bzw. Einsatzwelleneinheit im Übergangsbereich zum Balgboden eine Höhe auf, die der Höhe der die Einsatzfalten- bzw. Einsatzwelleneinheit aufnehmenden Falte oder Welle entspricht. Hierdurch wird erreicht, dass im Bereich des Bodens des Balges die Höhe sämtlicher Falten oder Wellen im Wesentlichen gleich hoch ist, wobei in Richtung auf die Mitte des Überganges zu die Falten oder Wellen insgesamt immer flacher werden und gegebenenfalls in einem Tuch auslaufen können, das den Balgboden bildet.

Nach einem weiteren vorteilhaften Merkmal der Erfindung ist vorgesehen, dass die Einsatzfalten- bzw. Einsatzwelleneinheit im Bereich des Übergangs zum Scheitel der aufnehmenden Falte bzw. Welle in etwa bis auf die Stärke des Falten- bzw. Wellenmaterials im Scheitel der Falte bzw. Welle ausläuft. Hieraus wird deutlich, dass im Querschnitt die Einsatzfalten- bzw. Einsatzwelleneinheit ein bananenähnliches Aussehen aufweist. Um die Falte des Einsatzfaltenelementes als solche zu stabilisieren kann vorgesehen sein, dass im Scheitel der Falten der Einsatzfalteneinheit ein Einfasselement, z. B. in Form eines Rahmens angeordnet ist. Gleiches gilt für die Hauptfalte.

Anhand der Zeichnungen wird die Erfindung nachstehend beispielhaft näher erläutert.
- Figur 1: zeigt perspektivisch einen Ausschnitt aus dem Eckbereich eines Balges im Übergang von der Seitenwand zum Boden des Balges;
- Figur 2: zeigt lediglich eine Einsatzfalteneinheit in einer Seitenansicht.

Ein Balg ist Bestandteil eines Überganges zwischen zwei gelenkig miteinander verbundenen Fahrzeugen. Der Balg, sei er als Wellen- oder Faltenbalg ausgebildet, umgibt den Übergangsbereich zwischen diesen beiden Fahrzeugen oder Fahrzeugteilen nach Art einer in sich geschlossenen Röhre, die im Querschnitt im Wesentlichen eine Rechteckform mit abgerundeten Ecken aufweist.

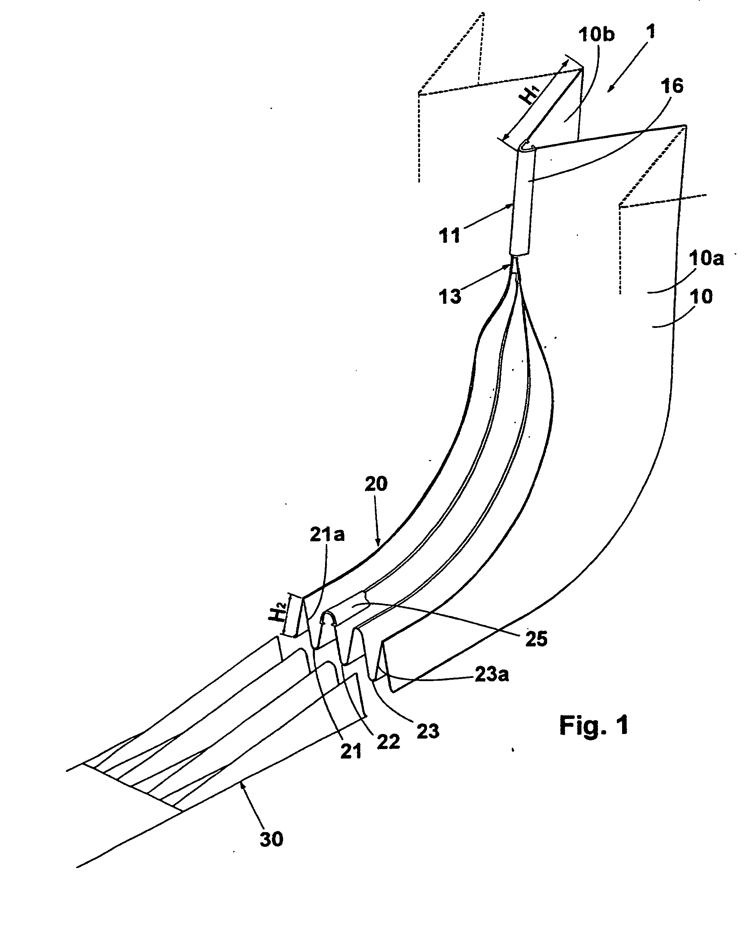

Bei der Darstellung gemäß Figur 1 handelt es sich - wie bereits ausgeführt - um einen Ausschnitt des Eckbereiches eines Faltenbalges im Übergang von der Seitenwand zum Boden. Zeichnerisch dargestellt ist der Teil eines Faltenbalges, es wird jedoch an dieser Stelle darauf hingewiesen, dass in ähnlicher Form auch ein Wellenbalg mit einer Einsatzwelleneinheit versehen werden kann. Der in der Figur 1 mit 1 bezeichnete Ausschnitt eines Faltenbalges zeigt die mit 10 bezeichnete Falte. Die Falte 10 (Hauptfalte) besitzt einen Scheitel 11, wobei der Scheitel 11 im Übergangsbereich von der Seitenwand zum Boden aufgetrennt ist, und dort die erfindungsgemäße Einsatzfalteneinheit 20 eingefügt ist. Diese Einsatzfalteneinheit 20 umfasst im vorliegenden Fall drei Einsatzfalten 21, 22, 23, wobei die äußeren Schenkel 21a und 23a der Einsatzfalten mit den Schenkeln 10a bzw. 10b der Hauptfalte 10 in Verbindung stehen. Diese Einsatzfalten 21, 22, 23 der Einsatzfalteneinheit laufen im Scheitel 11 der Hauptfalte 10 (Pfeil 13) zu quasi einem Punkt zusammen.

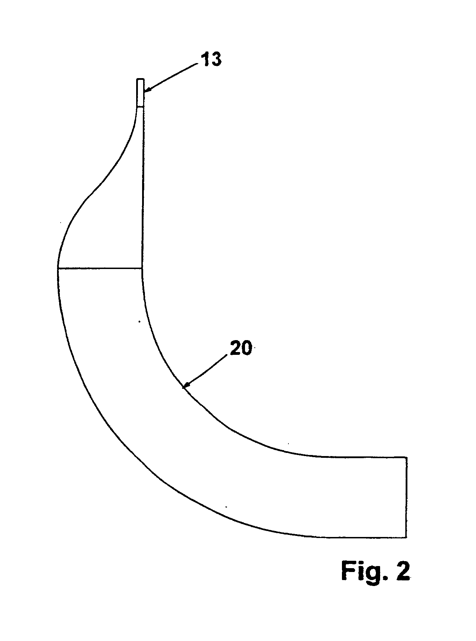

Aus Figur 2 ergibt sich im Querschnitt das Aussehen der Einsatzfalteneinheit; so ist insbesondere erkennbar, dass diese Einsatzfalteneinheit das Aussehen einer Banane aufweist. Im Bodenbereich schließt sich der schematisch dargestellte Balgboden 30 an die einzelnen Einsatzfalten bzw. Falten an (Figur 1). Der Balgboden 30 wird in Richtung auf die Mittelachse des Balges immer flacher, d. h. die Falten nehmen in der Höhe immer mehr ab, bis sie schlussendlich im Extremfall in einem Tuch auslaufen, um so eine maximale Bodenfreiheit zu ermöglichen.

Des Weiteren zeigt die Hauptfalte einen sogenannten Einfassrahmen, der das Bezugszeichen 16 besitzt. Dieser Einfassrahmen 16 sorgt für die Stabilisierung der Falte. Die Falten 21, 22, 23 der Einsatzfalteneinheit können ebenfalls auf ihrer Oberseite bzw. auch auf ihrer Unterseite entsprechende Einfassrahmen 25 aufweisen, die aber der besseren Übersicht halber lediglich angedeutet sind.

Es hat sich herausgestellt, dass bei einer Höhe H1 der Hauptfalte 10 von 120 mm und einer Höhe H2 der Falte 10 im Bodenbereich sowie der Einsatzfalten der Einsatzfalteneinheit in Höhe von jeweils 40 mm bei drei Einsatzfalten 21, 22, 23 ein maximaler Auszug von 165 mm bereitgestellt werden kann, wobei dieser Auszug genau dem Maß entspricht, das auch die Hauptfalte 10 bereitstellt. Der maximale Auszug von 165 mm könnte noch vergrößert werden, wenn auf die Einfassrahmen 16, 25 verzichtet würde.

## Patentansprüche

1. Falte oder Welle eines Balges eines Überganges zwischen zwei gelenkig miteinander verbundenen Fahrzeugen oder Fahrzeugteilen, z. B. einem Gelenkbus, wobei die Welle oder Falte im Eckbereich des Balges zur Vergrößerung des Auszuges des Balges im Eckbereich eine Einsatzfalten- bzw. Einsatzwelleneinheit mit mehreren Falten bzw. Wellen aufweist, wobei die Einsatzfalteneinheit (20) bzw. Einsatzwelleneinheit im Bereich ihres oberen Endes in dem Scheitel (11) der Falte (10) bzw. Welle ausläuft und mit dieser dort verbunden ist.

2. Falte oder Welle eines Balges eines Überganges zwischen zwei gelenkig im Fahrzeugen oder Fahrzeugteilen nach Anspruch 1,
**dadurch gekennzeichnet,**
**dass** die Einsatzfalten- bzw. Einsatzwelleneinheit (20) einteilig aus Kunststoff, z. B. PU gespritzt ausgebildet ist.

3. Falte oder Welle eines Balges eines Überganges zwischen zwei Fahrzeugen oder Fahrzeugteilen nach Anspruch 1,
**dadurch gekennzeichnet,**
**dass** die Falten (10) bzw. Wellen der Einsatzfalten- (20) bzw. Einsatzwelleneinheit im Übergangsbereich zum Balgboden (30) eine Höhe aufweisen, die der Höhe der die Einsatzfalten- (21, 22, 23) bzw. Einsatzwelleneinheit aufnehmenden Falte (10) bzw. Welle entspricht.

4. Falte oder Welle eines Balges eines Überganges zwischen zwei Fahrzeugen oder Fahrzeugteilen nach Anspruch 1,
**dadurch gekennzeichnet,**
**dass** die Einsatzfalten- (20) bzw. welleneinheit im Bereich des Überganges zum Scheitel (11) der aufnehmenden Falte oder Welle in etwa bis auf die Stärke des Falten- bzw. Wellenmaterials im Scheitel (11) der Falte oder Welle ausläuft.

5. Falte oder Welle eines Balges eines Überganges zwischen zwei Fahrzeugen oder Fahrzeugteilen nach Anspruch 1,
**dadurch gekennzeichnet,**
**dass** der Scheitel der Falten bzw. Wellen der Einsatzfalten- (20) bzw. Einsatzwelleneinheit ein Einfasselement (25), z. B. in Form eines Rahmens aufweist.

6. Falte oder Welle eines Balges eines Überganges zwischen zwei Fahrzeugen oder Fahrzeugteilen nach Anspruch 1,
**dadurch gekennzeichnet,**
**dass** die Höhe der die Einsatzfalten- (20) bzw. Einsatzwelleneinheit aufnehmenden Falte (10) bzw. Welle im Bodenbereich wesentlich geringer ist als im Seitenwandbereich.

## Claims

1. A pleat or corrugation of a bellows of a connection between two hinge-linked vehicles or vehicle sections e.g., of an articulated bus, the corrugation or pleat in the corner zone of the bellows being comprised, for the purpose of increasing the expansion of the bellows in the corner zone, of a pleat or corrugation insert unit having a plurality of pleats or corrugations, with said pleat or corrugation insert unit (20) tapering in the region of the upper end thereof toward the vertex (11) of the pleat (10) or corrugation where it is connected to said pleat or corrugation.

2. A pleat or corrugation of a bellows of a connection between two hinge-linked vehicles or vehicle sections according to claim 1, **characterized in that**, the pleat or corrugation insert unit (20) is integrally formed from plastic material, e.g., from injection moulded PU.

3. A pleat or corrugation of a bellows of a connection between two hinge-linked vehicles or vehicle sections according to claim 1, **characterized in that**, in the transition zone to the bellows bottom (30), the pleats (10) or corrugations of the pleat or corrugation insert unit (20) have a height that corresponds to the height of the pleat (10) or corrugation receiving the pleat or corrugation insert unit (21, 22, 23).

4. A pleat or corrugation of a bellows of a connection between two hinge-linked vehicles or vehicle sections according to claim 1, **characterized in that**, in the transition zone to the vertex (11) of the receiving pleat or corrugation, the pleat (20) or corrugation insert unit tapers to approximately the thickness of the pleat or corrugation material in the vertex (11) of the pleat or corrugation.

5. A pleat or corrugation of a bellows of a connection between two hinge-linked vehicles or vehicle sections according to claim 1, **characterized in that** the vertex of the pleats or corrugations of the pleat (20) or corrugation insert unit is provided with a border element (25), e.g., in the form of a frame.

6. A pleat or corrugation of a bellows of a connection between two hinge-linked vehicles or vehicle sections according to claim 1, **characterized in that**, the height of the pleat (10) or corrugation receiving the pleat or corrugation insert unit (20) is much lower in the bottom region than in the region of the side wall.

## Revendications

1. Pli ou ondulation d'un soufflet d'une intercirculation entre deux véhicules ou parties de véhicules articulés, p.ex. d'un bus articulé, l'ondulation ou le pli prévu dans l'angle du soufflet comportant dans l'angle du soufflet un ensemble de plis ou d'ondulations d'insertion constitué de plusieurs plis ou ondulations et destiné à augmenter l'extension du soufflet, l'ensemble de plis d'insertion (20) ou l'ensemble d'ondulations d'insertion s'amincissant progressivement à la hauteur de son extrémité supérieure jusqu'à atteindre la crête (11) de l'ondulation ou du pli (10) avec lequel il est relié.

2. Pli ou ondulation d'un soufflet d'une intercirculation entre deux véhicules ou parties de véhicules articulés selon la revendication 1,
**caractérisé en ce**
**que** l'ensemble de plis ou d'ondulations d'insertion (20) est réalisé d'un seul tenant en matière plastique, p.ex. en PU, par moulage par injection.

3. Pli ou ondulation d'un soufflet d'une intercirculation entre deux véhicules ou parties de véhicules articulés selon la revendication 1,
**caractérisé en ce**
**que** les plis (10) ou ondulations de l'ensemble de plis d'insertion (20) ou de l'ensemble d'ondulations d'insertion présentent, dans la zone de transition vers le fond (30) du soufflet, une hauteur correspondant à la hauteur du pli (10) ou de l'ondulation recevant l'ensemble de plis d'insertion (21, 22, 23) ou d'ondulations d'insertion.

4. Pli ou ondulation d'un soufflet d'une intercirculation entre deux véhicules ou parties de véhicules articulés selon la revendication 1,
**caractérisé en ce**
**que**, dans la région de la transition vers la crête (11) de l'ondulation ou du pli récepteur, l'ensemble de plis d'insertion (20) ou d'ondulations d'insertion s'amincit progressivement jusqu'à avoir environ l'épaisseur de la matière constituant le pli ou l'ondulation à la hauteur de la crête (11) du pli ou de l'ondulation.

5. Pli ou ondulation d'un soufflet d'une intercirculation entre deux véhicules ou parties de véhicules articulés selon la revendication 1,
**caractérisé en ce**
**que** la crête des plis ou des ondulations de l'ensemble de plis d'insertion (20) ou d'ondulations d'insertion comporte un élément de bordure (25) conformé par exemple en forme de cadre.

6. Pli ou ondulation d'un soufflet d'une intercirculation entre deux véhicules ou parties de véhicules articulés selon la revendication 1,
**caractérisé en ce**
**que**, dans la région du fond, la hauteur du pli (10) ou de l'ondulation recevant l'ensemble de plis d'insertion (20) ou l'ensemble d'ondulations d'insertion est sensiblement inférieure à sa hauteur dans la région de la paroi latérale.
